# EUROPEAN PATENT APPLICATION

(11) **EP 1 956 766 A1**
(43) Date of publication of application: **13.08.2008**
(21) Application number: 07002945.9
(22) Date of filing: 12.02.2007
(51) Int. Cl.: H04L 12/56

(54) **Method and device in particular for forwarding layer3- information and communication system comprising such device**

(71) Applicant: Nokia Siemens Networks GmbH & Co. KG, 81541 München (DE)
(72) Inventor: Armbruster, Friedrich, 81379 München (DE); Fröhler, Josef, 82065 Baierbrunn (DE); Treyer, Thomas, 81379 München (DE)

(57) **Abstract**

A method and a device are provided comprising the following steps: (i) receiving a Layer2-message at a first network component, said Layer2-message indicating an event concerning a connection path leading to or from the first network; (ii) passing the information related to the event concerning the connection path to a Layer3 of the first network component thereby generating a Layer3-information; and (iii) forwarding the Layer3-information to a second network component.

## Description

The invention relates to a method and a device in particular for forwarding Layer3-information and a communication system comprising such device.

Ethernet based Broadband Access Networks are widely deployed for High Speed Internet access and upgrading to triple play services, e.g., High Speed Internet (HIS), Voice-over-IP (VoIP) and Internet Protocol Television (IPTV).

These already existing or newly built-up Ethernet based Access Networks may also be used for network convergence and in future a wide range of services will be offered like residential dual or triple play services, whole-sale service models, business connect services, Plain Old Telephone Services (POTS) and ISDN services via VoIP inter-working to the backbone, backhauling services for mobile operators and more.

With a growing network service availability gets more important and resiliency in Ethernet based networks will be requested by network providers.

In Ethernet based networks, a range of resiliency protocols and networking options supporting resiliency already exists, e.g.:
- Link Aggregation Group (LAG),
- Spanning Tree Protocols (STP, RSTP, MSTP),
- Ethernet Ring Protection (ERP),
- MultiProtocol Label Switching (MPLS) and Transport MPLS (T-MPLS) over Ethernet general protection and fast reroute.

The selected resiliency mechanism in an Ethernet based network must closely follow operator demands and available resiliency methods do not fit.

E.g., the LAG-Standard is well suited for link redundancy, but does not cover redundancy of network elements itself.

Spanning Tree Protocols (STP, RSTP, MSTP) keep the Ethernet network loop-free, but do have problems with regard to scalability and stability. In addition, switchover time is too high for some services.

Ethernet Ring Protection (ERP) is not a feasible solution in case traffic flows use a tree topology rather than a ring topology.

(Transport) MultiProtocol Label Switching (MPLS, T-MPLS) provides tunneling/overlay but is complex to configure and maintain.

Existing Ethernet based access networks evolve from single based edge (e.g. Broadband Remote Access Server, BRAS) to multi-edge. Hence, network redundancy at the respective edge of the network has to be considered.

Typical networks are Layer2 (L2) based in the access network and Layer3 (L3) based in the edge/core network. By using independent mechanisms for access network and core network, the edge router is a single point of failure. Thus, whenever two edge routers are used for redundancy, the protection switch in the access network and in the core network have to be aligned. This requires a close coupling of Layer2 protection mechanism in the access and Layer3 protection mechanism in the core.

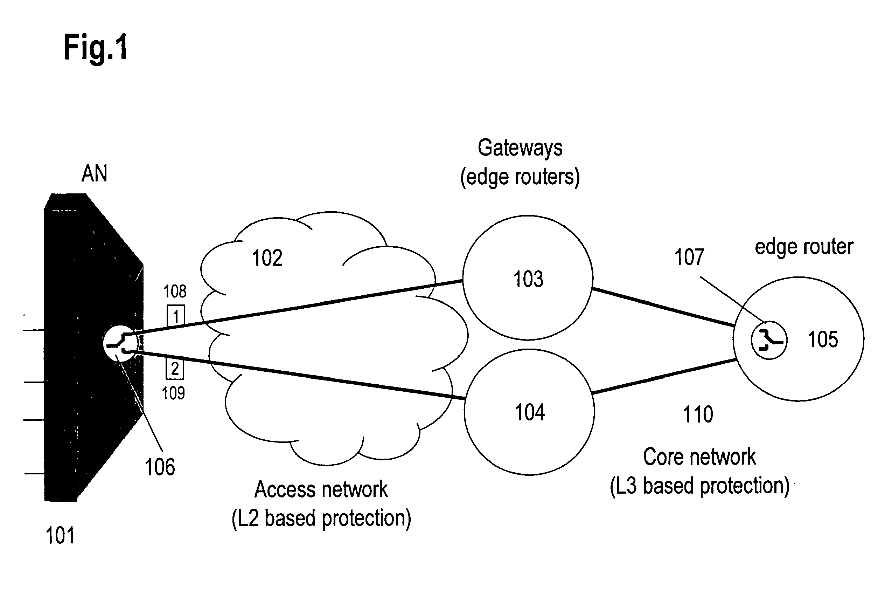

**Fig.1** shows a dual-homed Access Node (AN) 101 with two gateways, in particular edge routers 103 and 104, and an edge router 105, preferably towards a core network. The Access Node 101 is connected via an Access Network 102 with the edge routers 103 and 104, the Access Network 102 providing Layer2 based protection for the data transferred. The edge routers 103 and 104 are further connected to the edge router 105 via a core network 110 that provides Layer3 based protection for the data. Two connection paths 108 and 109 are identified, the first connection path 108 is a connection between the Access Node 101 through the edge router 103 to the edge router 105, whereas the second connection path 109 connects the Access Node 101 via the edge router 104 to the edge router 105. The connection paths 108 and 109 are chosen by selectors 106 and 107 arranged in the Access Node 101 and the edge router 105, respectively.

Whenever the Access Node 101 switches from the first connection path 108 to the second connection path 109, the edge router 105 has to apply the same switching, i.e. change to the second connection path 109 as well, or the connection between the Access Node 101 and the edge router 105 will be lost.

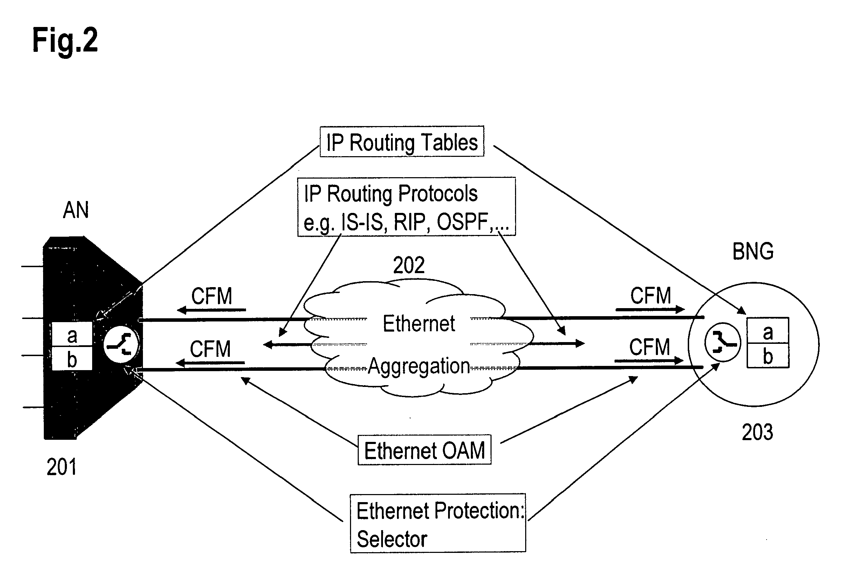

In **Fig.2** an Ethernet access network architecture with an Access Node (AN) 201 and a Broadband Network Gateway (BNG) 203, both are connected via an Ethernet network 202.

The Access Node 201 as well as the Broadband Network Gateway 203 support two physical interfaces for resiliency (dual homing), and both are interconnected with single or multi-stage Ethernet aggregation switches.

Fault detection and subsequent protection switching in Ethernet networks is provided by upcoming Ethernet OAM capabilities. Failure detection can be achieved by connectivity fault maintenance (CFM) capabilities. Protection switching behavior follows principles that are defined for SDH networks in draft ITU-T standard documents.

The selector for Ethernet protection will work on the physical interface or on Virtual Local Area Network (VLAN) level.

However, once including Internet Protocol (Layer3) aware functions at the edges of an Ethernet network, which shall be protected by resiliency mechanisms, both, Layer2 Ethernet Protection as well as Layer3 IP-Routing need to be considered.

At present, in Ethernet/IP networks resiliency functions processed on Layer2 (Ethernet) are fully independent of any resiliency function processed on the Internet Protocol Layer (Layer3).

However, timing parameters for protection switching in both, Ethernet and IP-layer, have to be engineered and maintained, considering the remaining network layer. In particular, multiple protection switching events in each network layer due to a single event are disadvantageous, because it can easily lead to miss-configurations and result in higher operational expenses (OPEX) or it may lead to non-optimized, long switch-over times.

The **object** to be solved is to avoid the disadvantages as mentioned before and to provide an approach that allows in particular fast and effective switchovers between at least two paths.

It is to be noted that "connection path" refers to all kinds of path that may be employed in a communication network. It could in particular refer to a part or portion of a path through one or more sections of a network or even through several different networks. However, the connection path does not imply that any connection has to be yet established. It is substantially an option that such connection could be established and data (e.g., voice or speech) may be conveyed via such connection (once established).

This problem mentioned is solved according to the features of the independent claims. Further embodiments result from the depending claims.

In order to overcome this problem, a method is provided comprising the following steps:
- receiving a Layer2-message at a first network component, said Layer2-message indicating an event concerning a connection path leading to or from the first network;
- passing the information related to the event concerning the connection path to a Layer3 of the first network component thereby generating a Layer3-information; and
- forwarding the Layer3-information to a second network component.

It is an advantage of this solution that a Layer2-message is much faster to recover an event of the connection path, e.g., a connection failure, than a Layer3-message.

Another advantage is that a Layer3-information can be forwarded directly based on a Layer2-message received at the first network component.

In an embodiment, the first network component and the second network component are connected via at least one network.

The at least one network could be a network of the following type:
- an Ethernet network;
- an IP network;
- an SDH network;
- an MultiProtocol Label Switching (MPLS) network.

In another embodiment, the first network component and the second network component are connected via at least two connection paths.

As a further embodiment, the Layer3-information is forwarded from the first network component to the second network component via a Layer3 Protocol Data Unit (PDU).

It is yet another embodiment that the Layer3-information is forwarded from the first network component to a third network component.

Preferably, the third network component can be connected to the first network component via at least one network.

Further, the first network component and the third network component can be connected via at least two connection paths.

In yet another embodiment, the second network component and the third network component are connected via at least two connection paths, wherein the first network component is arranged within one such connection path.

In a further embodiment, the Layer3-information is forwarded from the first network component to the second network component and/or to the third network component via a Layer3 Protocol Unit (PDU).

It is an advantage of such a configuration that the first network component once notified of a Layer2-message due to an event on a connection path forwards the Layer3-information to one or more associated network components. Hence, the event leading to the Layer2-message can be fast and efficiently processed by the network components affected.

In an embodiment, the event concerning the connection path is (associated with) at least one of the following events:
- a change of information regarding the connection path;
- a status of the connection path, in particular related to a quality or a performance of the connection path;
- an alarm indicating a change of state of the connection path;
- a failure;
- a dropout of connection.

In an embodiment, the Layer2-message is an Ethernet Operation and Maintenance (OAM) message. It can preferably be a Connectivity Fault Maintenance (CFM) message.

In yet another embodiment, the Layer3-information comprises a Layer3 routing information.

Further, a routing can be performed or initiated by Layer2 sending a Protocol Data Unit (PDU) of Layer2 directly to Layer3.

In another embodiment, the routing performed comprises a shutdown of a connection path due to the Layer2-message and/or the Layer3 information generated. Hence, if the Layer2-message indicates, e.g., an alarm with regard to a particular connection path, this connection path can be disabled by, e.g., updating routing tables in the affected network components (e.g., via a Layer3 routing update).

In yet another embodiment, the routing performed comprises a switchover from one connection path to another connection path. Hence, pursuant to the Layer2-message not only can a connection path be disabled, also another connection path (if such a connection path is available on standby) can be activated instead of the deficient connection path.

As a further embodiment, the routing is performed by entering a connection path (e.g., values/information associated with said connection path) in a routing table of an associated network component.

It is to be noted that processing such routing may comprise the steps of updating routing tables of affected network components. However, it is also possible that upon the event concerning the connection path conveyed by the Layer2-message, the routing-table may - at least partially - not be changed (yet). In such case, the events may be used for monitoring the condition of (a still working) connection path leading to a change of the routing only if, e.g., a value for a quality of this condition has gone below a determined threshold.

It is also an embodiment that one or more connection paths from one network component to another network component is/are used to employ either redundancy or a single connection path or redundancy of several connection paths.

Further, it is an embodiment that at least two connection paths from one network component to another network component are used to enable a load sharing mechanism.

In this regard, two particular embodiments are:

### (i) REDUNDANCY:

A first connection path is active, a second connection path is available (but not activated yet). This second connection path can be activated by updating the routing tables in the affected network components. In case of failure of the first connection path (notified by the Layer2-message as described), the first connection path is disabled and the second connection path is activated, both by updating the routing tables accordingly.

In addition, more than the first connection path can be active (via setup of the routing table) and one or more connection paths could be on standby. On failure, one (or more) deficient connection path(s) can be shut down and it can be switched over to one or more connection path(s).

### (ii) LOAD SHARING:

As described supra, more than one connection path can be active (and more than one connection path can be on standby). These several active connection paths could be used in parallel to distribute the load among those paths thereby enhancing the overall performance of the system. However, advantageously, load sharing can be easily combined with redundancy as illustrated.

It is further noted that any routing functionality, e.g., update of routing-table or switch-over as described supra, can take place in the network component, that is at the origin or at the end of a redundant path comprising at least two connection paths (i.e. a redundant path can range across one or more networks from an origin network component to an end network component, both such network components referred to as endpoints).

If a network component as described is located within such a redundant path (i.e. not an endpoint), the Layer2-message recognized at this network component is preferably forwarded to the associated endpoints of this redundant path. This can be done via the Layer3-information described, which could be conveyed across several networks to the endpoints of the redundant path.

In yet another embodiment, the connection path is determined via at least one of the following procedures:
- according to 802.1Q or 802.1ad;
- according to VLAN-Crossconnect;
- according to PBB-TE;
- according to T-MPLS.

In an embodiment, the connection path is loop-free.

Further, the connection path can be evaluated via a Spanning Tree Protocol (STP).

In another embodiment, a network component can be of the following type:
- A Gateway;
- An Access Node (AN);
- A Router, in particular an Edge Router or a Core Router;
- A component of or within a Core Network;
- A Gateway, in particular a Broadband Network Gateway (BNG).

The problem indicated supra is also solved by a device comprising a processor unit that is arranged / equipped such that the method as described is executable on said processor.

In an embodiment, the device is a communication device, in particular a network component.

In yet another embodiment, the device can be a device of the following type:
- A Gateway;
- An Access Node (AN);
- A Router, in particular an Edge Router;
- A component of or within a Core Network;
- A Gateway, in particular a Broadband Network Gateway (BNG) .

In a further embodiment, the device comprises a routing table.

In addition, the problem can be solved by a system, in particular a communication system, comprising a device as described.

Embodiments of the invention are shown and illustrated in the following figures:
- Fig.3: shows an Ethernet access network architecture with an Access Node and a Broadband Network Gateway, both are connected via an Ethernet network, wherein the Access Node and the Broadband Network Gateway contain routing tables with priority entries;
- Fig.4: shows link redundancy between an Access Node AN and a Broadband Network Gateway (BNG);
- Fig.5: shows link redundancy between an Access Node AN and a Broadband Network Gateway (BNG) combined with Broad-band Network Gateway (BNG) redundancy;
- Fig.6: shows a flow chart comprising steps of a method for routing connection paths;
- Fig.7: shows an example for coupling two networks providing protection of the same network layer through more than one gateway leading to redundant interconnection;
- Fig.8: shows an example of coupling two networks providing protection on different network layers through more than one gateway leading to redundant interconnection;
- Fig.9: shows an example of two connection paths via three networks;
- Fig.10: shows a flow chart comprising steps of a method for forwarding a Layer3-information.

The approach provided herewith combines the protection mechanisms of the Ethernet and of the IP-layer by enabling an IP-routing function on behalf of a Layer2-message, in particular an Ethernet Operation and Maintenance Connectivity Fault Maintenance (OAM CFM) message, recognized at both sides of the network.

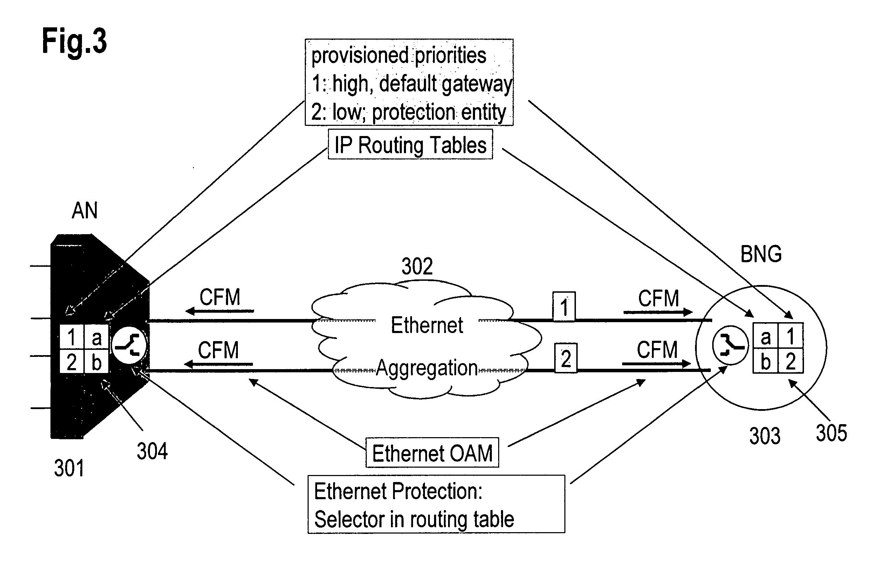

Reference is made to **Fig.3** comprising an Ethernet access network architecture with an Access Node (AN) 301 and a Broadband Network Gateway (BNG) 303, both are connected via an Ethernet network 302. Both, the Access Node 301 and the Broadband Network Gateway 303 contain IP routing tables 304 and 305 with priority entries, i.e. "1" for high priority indicating that the associated connection path is the default and "2" for low priority indicating the standby connection path used for redundancy and/or protection purposes.

The network elements 301 and 303 have routing entries for each connection path. Each routing entry is bound to a Maintenance Association respective a Maintenance Association End Point (MEP).

When a Maintenance Association End Point raises an alarm, the corresponding routing entry is disabled. The resulting action depends on the routing algorithm of the Layer3 of the network component 301, 303. If the routes are prioritized, a single path can be chosen accordingly. If the network component 301, 303 implements Equal Cost Multiple Path (ECMP), a load sharing over all redundant paths may take place.

The IP-routing table will be changed as fast as Ethernet protection switching is performed. To overcome any race conditions with Layer3 routing protocols, these routing protocols are preferably disabled for the corresponding links or VLANs.

Both, the Ethernet OAM Maintenance Associations and the corresponding static routing entries can be planned and configured via a central tool. This bears the advantage that even in large networks scalability issues can be avoided.

The static routes are configured both at the Access Node 301 and at the edge router or Broadband Network Gateway 303. If an edge router's static route goes down due to an MEP alarm, the edge router changes the publication of this route in the routing protocols towards the core network. Therefore the sync between the MEP protection switch in the access network and the dynamic routing protocols of the core network can be ensured.

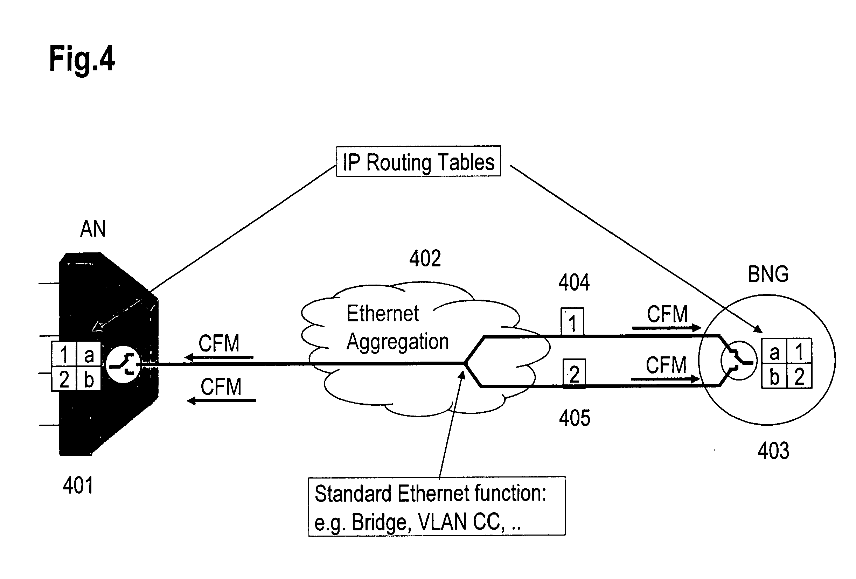

**Fig.4** shows link redundancy between an Access Node (AN) 401 and a Broadband Network Gateway (BNG) 403, connected via an Ethernet network 402.

The Ethernet protection method is a so called "linear protection" with pre-configured working and protecting end-to-end paths. By its nature, Ethernet is connection-less, but there are several possibilities to define a connection-oriented path through the Ethernet network. Examples as how to find such paths are given in, e.g., 802.1Q, 802.1ad, VLAN-Crossconnect, PBB-TE, T-MPLS.

According to these mechanisms, several redundant connection paths can be created between, e.g., the Access Node 401 and the Broadband Network Gateway 403. Every path is created as a loop-free entity, therefore a Spanning Tree Protocol (STP) is not mandatory in this application.

With the proposed combination of Ethernet OAM and protection and IP-layer routing by enabling an IP routing function on behalf of Ethernet-OAM CFM messages, flexible resiliency scenarios of an Ethernet/IP network can be supported.

The example given in Fig.4 shows two connection paths 404 and 405 between the Access Node 401 and the Broadband Network Gateway 403.

Due to a Connectivity Fault Maintenance (CFM) message a switchover from one connection path 404 to another connection path 405 can be initiated, i.e. a Layer2 message triggers directly a Layer3 (IP-)routing function hence updating the entries of the respective router tables in the Access Node 401 and in the Broadband Network Gateway 403.

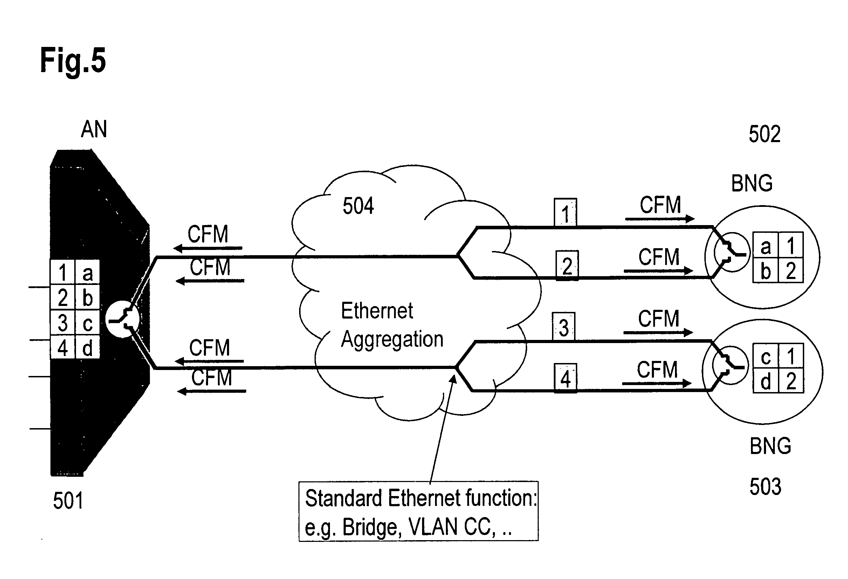

A further example is shown in **Fig.5**, wherein link redundancy between an Access Node (AN) 501 and a Broadband Network Gateway (BNG) is combined with Broadband Network Gateway (BNG) redundancy 502, 503. The Access Node 501 and the Broadband Network Gateways 502 and 503 are connected via an Ethernet network 504.

In principle, the comments to Fig.4 apply in an analogue manner also to Fig.5. However, in Fig.5 each connection with each Broadband Network Gateway 502, 503 comprises two connection paths that can be updated or set up according to Layer2-messages as described above.

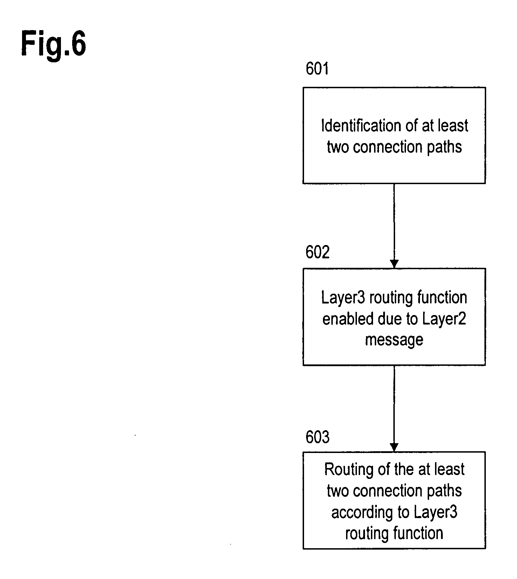

**Fig.6** shows a flow chart comprising steps of a method for routing connection paths. In a fist step 601 at least two connection paths, preferably through an Ethernet network, are identified and may be used at least partially to transfer voice or data from a first network component to a second network component, e.g., from the Access Node 401 to the Broadband Network Gateway 403 of Fig.4.

In a next step 602, a Layer3 routing function is enabled at the affected network components due to a Layer2-message. Subsequently, the routing function may change the current routing situation according to the Layer3 routing function in a step 603.

Hence, a Layer2-message has a direct impact on the Layer3 routing function, i.e. Layer3 routing (IP-routing) is initiated based on a Layer2-message.

Preferably as a sub-step of step 602, Layer2-messages are monitored and upon notification of, e.g., an alarm due to a lost connection path, the Layer3 routing function is triggered by the respective Layer2.

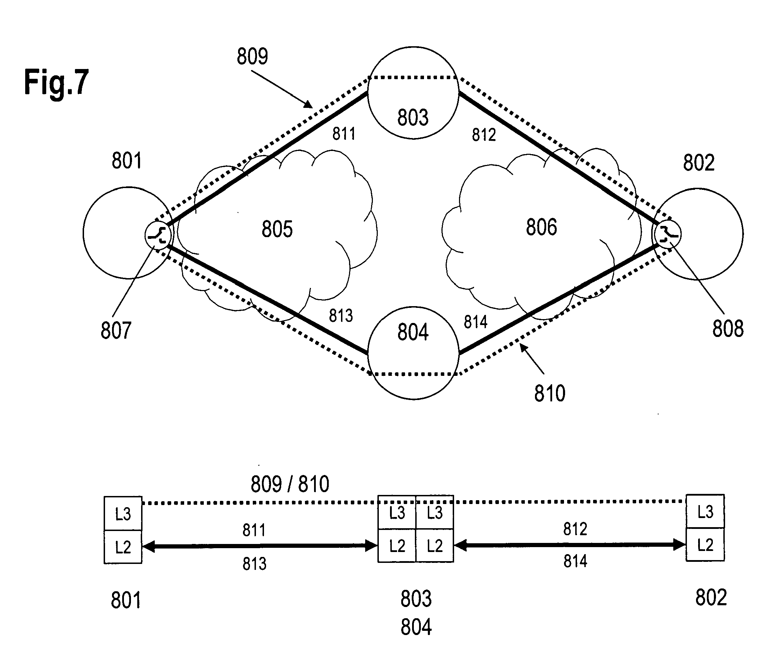

**Fig.7** shows an example for coupling two networks 805 and 806 providing in particular protection of the same network layer through more than one gateways leading to redundant interconnection. This scenario may be applicable for, e.g., dual homed access networks.

Fig.7 shows an Access Node 801 with a selector 807 and an Access Node 802 with a selector 808. Each selector 807 or 808 can be realized as a routing table.

A first connection path 809, 811, 812 connects the Access Node 801 via a gateway 803 and a second connection path 810, 813, 814 via a gateway 804 with the Access Node 802.

In the example of Fig.7 all network components shown comprise at least a Layer2 and Layer3 protocol stack.

The following Layer2 connections are indicated in Fig.7:
- connection 811 between Access Node 801 and gateway 803;
- connection 812 between gateway 803 and Access Node 802;
- connection 813 between Access Node 801 and gateway 804; and
- connection 814 between gateway 804 and Access Node 802.

Connection 809 indicates a Layer3 connection between Access Node 801 and Access Node 802 via gateway 803 and connection 810 indicates a Layer3 connection between Access Node 801 and Access Node 802 via gateway 804.

Both networks 805 and 806 in Fig.7 are, e.g., Ethernet networks.

The first connection path and the second connection path can be redundant to one another, e.g. in normal operation the first connection path is active. A failure of connection may occur on connection 811. This leads to an alarm, i.e. a Layer2-message (a Connectivity Fault Maintenance (CFM) message) is sent to the gateway 803 which leads to Layer3-information created at the gateway 803 and further sent to the Access Node 802. Access Node 801 may also receive a Connectivity Fault Maintenance (CFM) message thereby recognizing that the first connection path through gateway 803 is no longer available. Hence, Access Node 802 and Access Node 803 switch via selectors 807 and 808 to the second connection path through gateway 804.

In summary, the information of a deficient section of a connection path can be conveyed effectively to the endpoint network component initiating a counter-measure, e.g. a switch-over to a standby connection path. This allows a Layer3 protection switching on an End-to-End basis as indicated by the Layer3 connections 809 and 810.

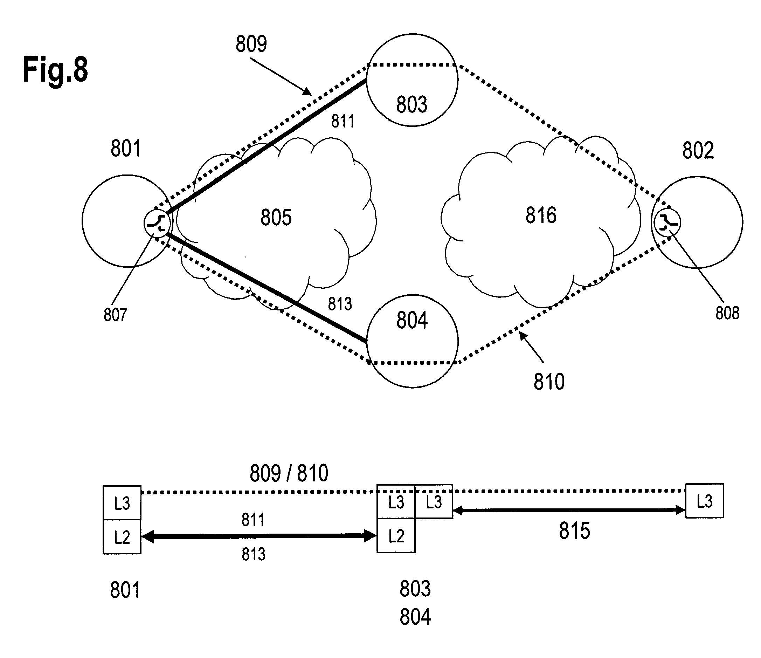

**Fig.8** shows an example of coupling two networks providing protection on different network layers through more than one gateway leading to redundant interconnection.

Fig.8 is similar to Fig.7 as described before. The only difference is that network 806 of Fig.7 has been substituted by a network 816 comprising a different technology than the network 805.

As an example, the network 805 is an Ethernet network and the network 816 is an IP network.

As described supra, if an error occurs on connection 811, this error is recognized by gateway 803 via a Layer2-message received. Gateway 803 passes the information to its Layer3 and forwards this Layer3-information to the associated Access Node 802 (as there is in particular no Layer2-connection that could be used to forward such Layer2-message from the gateway 803 to the Access Node 802). By receiving the Layer3-information, the Access Node 802 realizes that the first connection path to Access Node 801 is no longer valid and switches over to the second connection path. Hence, Layer3 protection switching is enabled on an End-to-End basis, e.g. between both Access Nodes 801 and 802.

The Layer3-information sent from the gateway 803 to the Access Node 802 can be a Layer3 procedure, e.g. Open Shortest Path First (OSPF).

It is to be noted that the connectivity from one Access Node to another does not have to be the same for both directions. Instead, it may be applicable that one direction is valid via the first connection path, but not the opposite direction.

Furthermore, the Access Node could also be a network component of another type, e.g., a router, in particular an edge router, or a gateway of any kind.

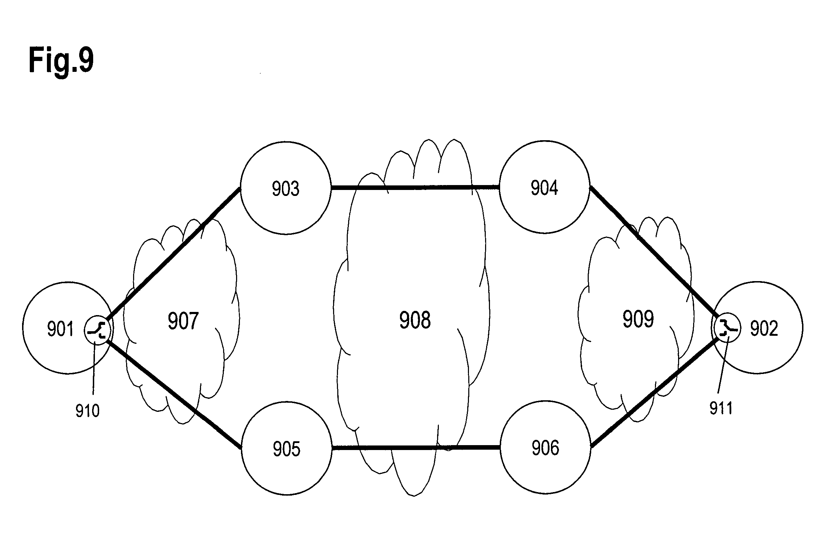

**Fig.9** shows an example of two connection paths via three networks. An Access Node 901 is connected to an Access Node 902 via two redundant connection paths through networks 907, 908 and 909, first via gateways 903 and 904 and second via gateways 905 and 906.

The switchover functionality, preferably realized by selectors or routing tables 910, 911, lies within the endpoints of the redundant connection paths, i.e. within the Access Nodes 901 and 902.

Dependent on the type of network, Layer2-messages can be detected by any gateway 903 to 906 or Access Node 901, 902 and initiate a Layer3-information to be forwarded to the associated (other) Access Node(s) thereby leading to a Layer3 protection switching on an End-to-End basis as described supra.

As the gateways comprise a Layer3 component, they can not only create a Layer3-information to be forwarded as a Layer3 Protocol Data Unit (PDU) to an adjacent network component (other gateway or Access Node), but the gateways may also forward a Layer3 PDU received (created elsewhere, i.e. in an another gateway or Access Node). The redundant (as well as load sharing) mechanism works transparent from one endpoint of the respective connection path to the other.

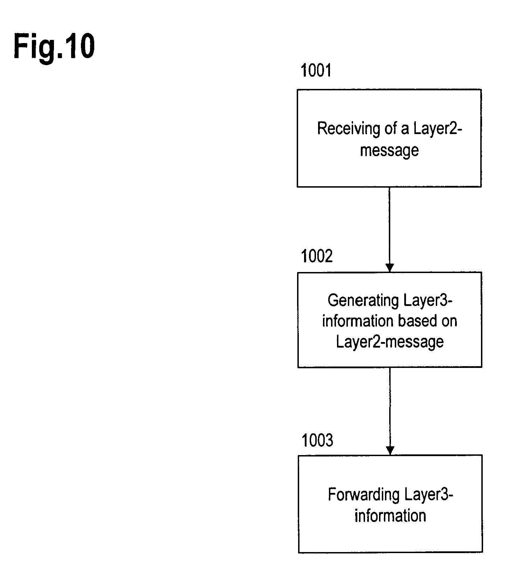

In **Fig.10** a flow chart is shown comprising steps of a method for forwarding a Layer3-information.

In a step 1001 a Layer2-message is received at a first network component. This Layer2-message indicates an event concerning a connection path, said connection path leading from or to this first network component.

Next, in a step 1002 the information relating to the event concerning the connection path is passed to Layer3 of the first network component thereby generating a Layer3-information.

This Layer3-information is forwarded to a second network component in a step 1003.

## Claims

1. A method comprising the following steps:
- receiving a Layer2-message at a first network component, said Layer2-message indicating an event concerning a connection path leading to or from the first network;
- passing the information related to the event concerning the connection path to a Layer3 of the first network component thereby generating a Layer3-information; and
- forwarding the Layer3-information to a second network component.

2. The method according to claim 1, wherein the first network component and the second network component are connected via at least one network.

3. The method according to claim 2, wherein the at least one network comprises at least one of the following networks:
- an Ethernet network;
- an IP network;
- an SDH network;
- an MultiProtocol Label Switching (MPLS) network.

4. The method according to any of the previous claims, wherein the first network component and the second network component are connected via at least two connection paths.

5. The method according to any of the previous claims, wherein the Layer3-information is forwarded from the first network component to the second network component via a Layer3 Protocol Data Unit (PDU).

6. The method according to any of the previous claims, wherein the Layer3-information is forwarded from the first network component to a third network component.

7. The method according to any claim 6, wherein the third network component is connected to the first network component via at least one network.

8. The method according to any of claims 6 or 7, wherein the first network component and the third network component are connected via at least two connection paths.

9. The method according to any of claims 6 to 8, wherein the second network component and the third network component are connected via at least two connection paths, wherein the first network component lies within one such connection path.

10. The method according to any of claims 6 to 9, wherein the Layer3-information is forwarded from the first network component to the second network component and/or to the third network component via a Layer3 Protocol Data Unit (PDU).

11. The method according to any of the previous claims, wherein the event concerning the connection path is or is associated with at least one of the following events:
- a change of information relating to the connection path;
- a status of the connection path, in particular related to a quality or a performance of the connection path;
- an alarm indicating a change of state of the connection path;
- a failure;
- a dropout of connection.

12. The method according to any of the previous claims, wherein the Layer2-message is an Ethernet Operation and Maintenance (OAM) message, in particular a Connectivity Fault Maintenance (CFM) message.

13. The method according to any of the previous claims, wherein the Layer3-information comprises a Layer3 routing information.

14. The method according to any of the previous claims, wherein a routing is initiated by Layer2 sending a Protocol Data Unit (PDU) of Layer2 directly to Layer3.

15. The method according to claim 14, wherein the routing performed comprises a shutdown of a connection path due to the Layer2-message and/or the Layer3-information generated.

16. The method according to any of claims 14 or 15, wherein the routing performed comprises a switchover from one connection path to another connection path.

17. The method according to any of claims 14 to 16, wherein the routing is performed by entering a connection path in a routing table of an associated network component.

18. The method according to any of the previous claims, wherein one or more connection path from one network component to another network component is/are used to employ either redundancy of a single connection path or redundancy of several connection paths.

19. The method according to any of the previous claims, wherein at least two connection paths from one network component to another network component are used to enable a load sharing mechanism.

20. The method according to any of the previous claims, wherein a connection path is determined via at least one of the following procedures:
- according to 802.1Q or 802.1ad;
- according to VLAN-Crossconnect;
- according to PBB-TE;
- according to T-MPLS.

21. The method according to any of the previous claims, wherein the connection path is loop-free.

22. The method according to any of the previous claims, wherein the connection path is determined via a Spanning Tree Protocol.

23. The method according to any of the previous claims, wherein a network component can be of the following type:
- A Gateway;
- An Access Node (AN);
- A Router, in particular an Edge Router;
- A component of or within a Core Network;
- A Gateway, in particular a Broadband Network Gateway (BNG).

24. A device comprising a processor unit that is equipped such that the method according of any of the preceding claims is executable on said processor.

25. The device according to claim 24 being a communication device, in particular a network component.

26. The device according to any of claims 24 or 25, wherein the device is of the following type:
- A Gateway;
- An Access Node (AN);
- A Router, in particular an Edge Router;
- A component of or within a Core Network;
- A Gateway, in particular a Broadband Network Gateway (BNG) .

27. The device according to any of claims 24 to 26, comprising a routing table.

28. Communication system comprising the device according to any of claims 24 to 27.
